Europäisches Patentamt

European Patent Office

Office européen des brevets

(11) Publication number: **0 096 470**
A2

# (12) EUROPEAN PATENT APPLICATION

(21) Application number: **83302644.6**

(22) Date of filing: **10.05.83**

(51) Int. Cl.³: **B 25 H 1/10**

(30) Priority: **10.05.82 GB 8213768**
**13.12.82 GB 8235487**

(43) Date of publication of application:
**21.12.83 Bulletin 83/51**

(84) Designated Contracting States:
**AT BE CH DE FR GB IT LI LU NL SE**

(71) Applicant: NEWJIG LIMITED
33 Mount Pleasant Road
Tunbridge Wells Kent(GB)

(72) Inventor: Ede, Douglas Frederick Charles
13 Dornden Drive
Langton Green Tunbridge Wells Kent(GB)

(72) Inventor: Wilkinson, Brian Stephen
176 Exning Road
Newmarket Suffolk(GB)

(72) Inventor: Mynott, Colin Burnell
176 Exning Road
Newmarket Suffolk(GB)

(74) Representative: Allen, William Guy Fairfax et al,
J.A. KEMP & CO. 14 South Square Gray's Inn
London WC1R 5EU(GB)

(54) Workbenches.

(57) A bench having a horizontal working surface and a fence at the rear edge which defines a straight edge. The fence includes a forwardly extending ledge which overhangs the rear portion of the working surface. The fence and ledge are vertically movable relative to the working surface either by movement of the fence or preferably by movement of the working surface, so that a workpiece on the working surface can be releasably clamped between the ledge and the working surface. A bridge is secured to the fence and includes guide rails extending forwardly over the working surface accurately perpendicular to the fence, to guide a carriage on which can be mounted a power tool such as a router, e.g. to form an accurate edge on the workpiece.

./...

EP 0 096 470 A2

*Fig.1.*

WORKBENCHES

The present invention relates to workbenches.

Various proposals have been made for the construction of workbenches.  For example, British Patent Specification 1267032 discloses a workbench including a pair of elongate vice members having their upper surfaces lying in substantially the same horizontal plane to form a working surface, the members being supported from below by a supporting structure. These elongate vice members are of a relatively simple construction, effectively in the form of two planks of wood, and the planks of wood are used to support the workpiece of the upper surface, a facility being provided for clamping the workpieces by inserting pegs in holes in the plank-like vice members, the pegs having heads which overlie the edge of the workpiece. Alternatively, one can clamp the workpiece between the facing side edges of the plank-like vice members. Provision is made for the planks to be moved either parallel to one another or at an angle to one another, since there are provided two operating screws, one adjacent each end of a pair of vice members.

While this is very satisfactory for many uses, the structure is not capable of holding large workpieces and clamping them firmly.  Provision has been made with a structure such as shown in Specification 1267032 to extend the upper surface area, but this is not entirely satisfactory.  Furthermore, no provision is made for accurately mounting a tool on the workbench provided.

It is now proposed, according to the present invention, to provide a bench comprising a substantially horizontal working surface, a fence defining a straight edge adjacent the rear side of the working surface, a ledge mounted on the fence and extending over a portion of the working surface and means to move the ledge vertically, relative to the working surface, so that a workpiece on the working surface may be releasably clamped between the ledge and the working surface.

The working surface is advantageously in the form of a large table-like structure, which can have a central groove extending from the front to the back for a reason to be explained later.

The advantage of the structure of the present invention is that a very large workpiece can be placed on the working surface and can be clamped accurately with a datum surface of the workpiece against the fence.

Preferably the ledge is formed integrally with the fence. In one particular structure the ledge and the fence are both continuous elements, thus being of "angle iron" structure. The ledge may be provided with a series of accurately spaced vertical holes to enable one or more pegs to be placed therethrough for accurately positioning a workpiece.

The fence preferably has a bridge which is rigidly connected to the fence so as to extend forwardly over the full front-to-back width of the working surface. The bridge should include a guide or guides which extend accurately perpendicular to the straight edge defined by the fence, the bridge being vertically movable with the fence as a unit. This can be achieved by the operation of a single handle which, via a series of gears, for example, worms and pinions, at four locations, can cause the bridge and the fence always to be accurately spaced the same distance over the whole of the working surface. A further clamp could be provided on the bridge at the front and/or on a carriage which is movable along the guide or guides of the bridge, to enable the workpiece to be clamped not only at the back by the ledge, but also at the front.

In a presently preferred construction, however, the fence, the ledge and advantageously also the bridge are fixed members mounted on the frame of the workbench and the working surface is vertically movable. This may be achieved by having a working surface forming the top of a table, the vertical position of which can be adjusted. An example of a mechanism for achieving this includes a threaded shaft, which is rotatable by means of a handle engaging a nut carried by a crank mounted on one of two generally horizontally extending cross-shafts. Each cross-shaft carries two parallel radially extending arms each having a roller on its free end engageable with the undersurface of the table, the two cross-shafts being connected by a rod journalled to the crank mounted on each cross-shaft. Rotation of the handle will cause the nut to move, thus pivoting the two cross-shafts and the arms carried thereby. This will cause raising or lowering of the table, so that its upper surface remains horizontal.

The table may be formed as a glass reinforced plastic structure having a peripheral skirt and longitudinally extending metal rails on its undersurface to rigidify it. The rails, which may be profiled, e.g. of top-hat section, can also act as tracks for the rollers. Bolts which hold the fence to the frame may pass through vertical slots in the skirt and act to guide the table during its vertical movement.

The bridge can be provided with a carriage for mounting a tool such as a router, saw or the like. The carriage is advantageously provided with a symmetrical, e.g. square, recess in its upper surface which is capable of accommodating a similarly shaped plate on
the tool. This enables a tool to be mounted in two
orientations accurately perpendicular to one another.
Thus, for example, if the tool is a saw it can be used
to cut the workpiece from front to back, by moving the
carriage along the guide, or it could be used to cut
parallel to the fence by locking the carriage on the
guide and moving the workpiece relative to the tool
while abutting the fence.

When moving a saw or other tool from front to
back the tool can pass through the central groove
referred to earlier. When using a saw to cut parallel
to the fence, the lower part of the saw can be
accommodated in the slot or a further slot extending
parallel to the fence.

To assist in this movement of the workpiece
while abutting the fence, there may be provided a
pusher member comprising a base having at least two
laterally extending loops of resilient plastics material,
the loops extending at an acute angle to the lateral
edge of the base and being inclined in the same sense.
This inclination will be towards the direction of
movement of the workpiece.

An alternative construction of pusher member
comprises a strip of material which is sufficiently thin
to pass readily under the bridge when the ledge is
clamping the workpiece, and this strip of material is
provided with at least two spaced resiliently urged
rollers on its side edge, the rollers being engageable
against the edge of the workpiece parallel to the edge
abutting the fence. The rollers will push the workpiece
against the fence and will allow the workpiece to move
readily parallel to the fence.

In order that the present invention may more
readily be understood, the following description is

- 5 -

given, merely by way of example, reference being made to the accompanying drawings, in which:-

Figure 1 is a perspective view from above, the rear and one side of one embodiment of workbench according to the invention;

Figure 2 is a side elevation of the workbench of Figure 1 from the other side;

Figure 3 is a front elevation of the workbench of Figures 1 and 2;

Figure 4 is a plan view of the pusher member shown in Figure 1;

Figure 5 is a perspective view from above the rear and one side of a second embodiment of workbench according to the invention;

Figure 6 is a front elevation of the workbench taken in section of the construction of Figure 5;

Figure 7 is an end elevation taken in section of the construction of Figures 5 and 6;

Figure 8 is an enlarged side elevation showing the support for the bridge;

Figure 9 is a perspective view of a clamping member;

Figure 10 is a scrap section showing the means for securing the clamping member in place; and

Figure 11 is a top plan view of a further form of pusher member.

Referring to the drawings, there is illustrated a workbench comprising a set of four foldable legs 10, each provided with a centrally hinged brace 11, the legs and braces being connected to a frame 12 of generally open rectangular form. The frame has fixedly mounted thereon two rectangular boards 13 and 14, the board 13 shown being slightly larger than the board 14. These are spaced apart slightly to provide a groove 15 which extends from front to back.

Adjacent the rear of the boards 13 and 14 is a fence 16 which defines a substantially straight edge along the rear edge of the two boards, the fence having a gap at the location of the groove 15. Each part of the fence 16 has a generally horizontally extending ledge 17 which overhangs a rear portion of the associated board 13, 14. Thus, the fence and ledge parts are of "angle iron" configuration, the ledge having a large number of spaced vertical holes 18 therein.

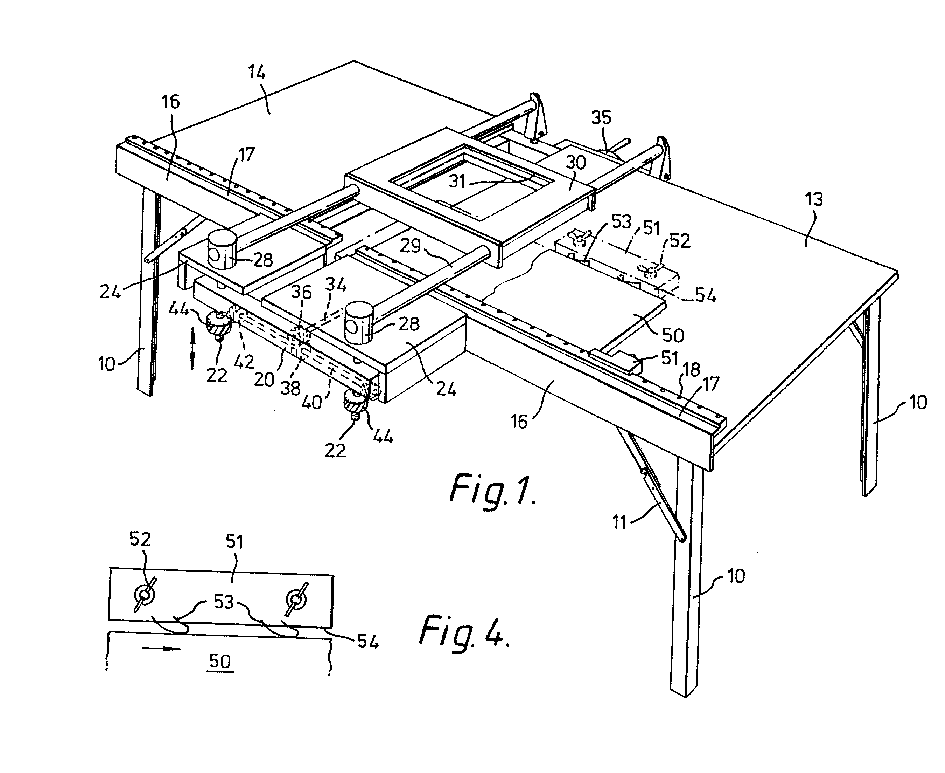

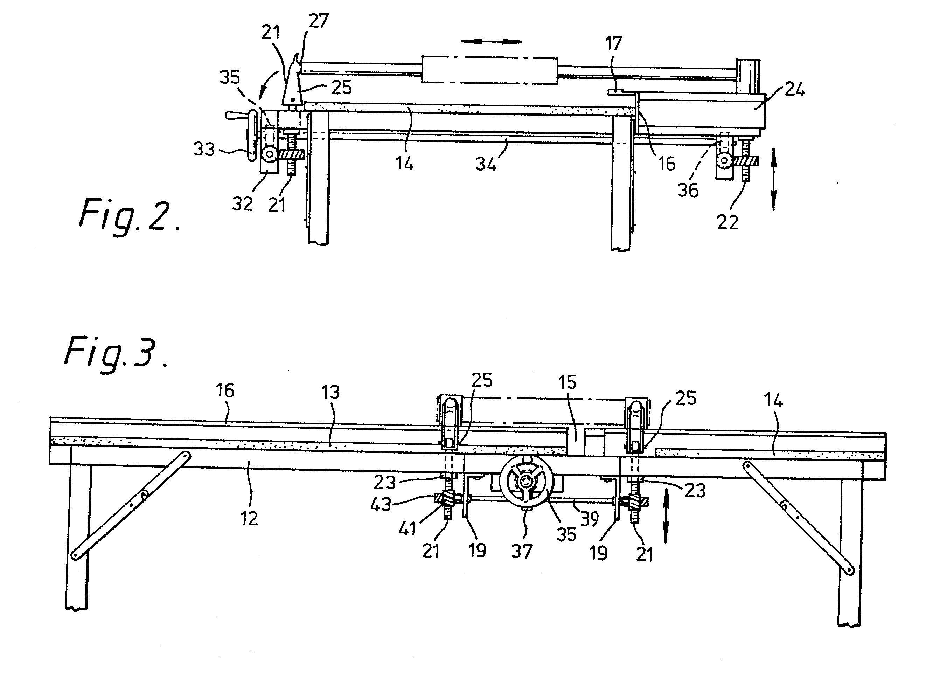

The frame 12 has formed thereon a pair of downwardly extending brackets 19 (Figure 3) and a rearwardly extending portion 20 (Figure 1). Four screw-threaded pillars comprising a front pair 21 and a rear pair 22 threadedly engaged in nuts 23 in the frame 12 and the portion 20 respectively. At their upper ends the pillars 22 are secured to platforms 24 and which carry the fence parts 16 and the associated ledges 17. At the front of the bench, the pillars 21 are each connected via a pivot 25 to a foldable front support column 26, each having a rearwardly projecting part 27.

Mounted on the platforms 24 are uprights 28, from which are forwardly cantilevered guide bars 29, which as shown are tubular, the forward ends being engageable over the parts 27 of the front support columns 26. In this way the guide bars 29 are positioned so that they extend very accurately perpendicular to the straight edge defined by the fence 16.

Forwardly and rearwardly slidable on the guide bars 29 is a carriage 30 having a central recess 31 which is substantially square. A tool, such as a router or a saw (not shown) having a correspondingly shaped plate can be seated in the recess 31 with its tool part extending downwardly. In this way the router or saw can be caused either to extend along the groove 15 or perpendicular thereto.

Mounted on a front skirt 32 of the frame is a winding handle 33 which has a shaft 34 which extends to the rear of the bench. At the front and the rear the shaft 34 is provided with a worm 35, 36 which engages in a pinion 37, 38, mounted on front and rear transverse shafts 39 and 40, these shafts each having, at each end, a further worm 41, 42, engageable with a pinion 43, 44 secured to the pillars 21, 22. Thus, rotation of the handle 35 will cause rotation of the shafts and thus of the pillars 21, 22 so that the platform 24, the front supports 26 and the fence parts 16 with their ledges 17 will all move up and down at the same rate relative to the working surfaces of the top of the boards 13, 14. Thus, a workpiece 50 may be placed on the working surface and pushed against the fence. Thereafter the handle 35 can be operated to cause all of the movable parts mentioned above to be lowered so that the ledge 17 will clamp on the workpiece and hold it firmly. Before this is done, a slider 51 on the fence can be moved to a suitable position and locked by passing a pin (not shown) through one of the holes 18 at a particular position, thus accurately to locate the workpiece in the manner shown.

One can then carry out, for example, a transverse saw cut on the workpiece and then the finished product can be produced with a router mounted on the carriage, the router giving a very accurate finished surface which is perpendicular to the edge and the faces of the workpiece board.

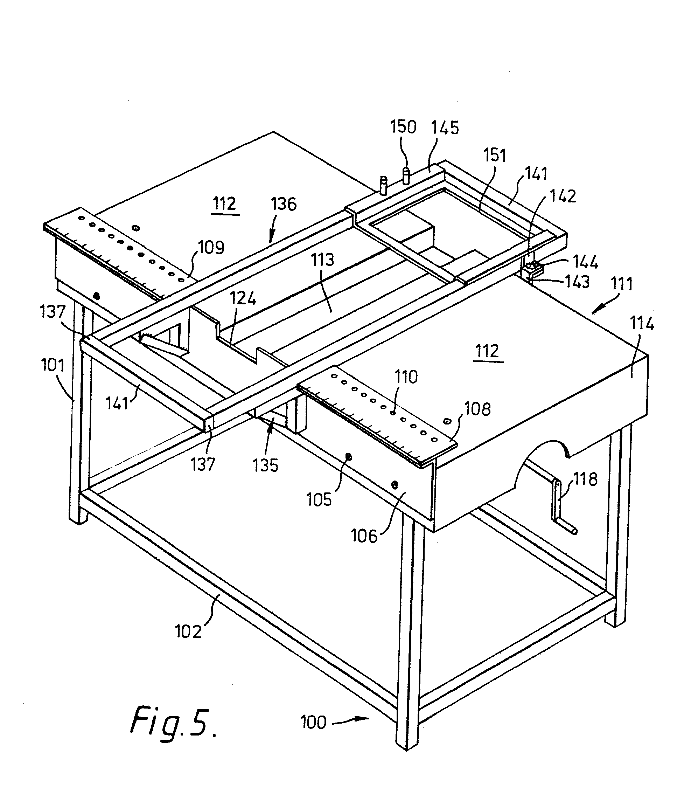

If one wishes to cut in a direction parallel to the fence, then one can take the saw and rotate it through a right angle so that it again sits in the recess 31 but with its blade parallel to the fence 17. One can then mount on the board 13 or the board 14 a pusher member 51, this being held in position by wing nuts 52 having bolts engageable in T-slots (not shown) in the board. It will be noted that the pusher member has two loops of plastic 53 on the edge 54 thereof, these loops both being inclined at an acute angle to the edge 54 (see Figure 4), the angles being in the same sense. Thus, a workpiece can be pushed from left to right, as seen in Figure 4, and maintained firmly against the fence. While this is being done the carriage 30 can be accurately located by means of pins (not shown) passing through holes in the carriage and holes in the guides 29.

When one wishes to operate on a large workpiece, the front supports 26 can be folded forwardly and the workpiece introduced from the front. Because of the strength of the structure it is not absolutely essential to have these front supports, although in some instances it is advantageous.

If it is desired to hold the workpiece firmly, particularly when doing a cutting motion by moving the carriage along the guides 29, then provision can be made on the guides, or on the carri ge, or both, to engage the front edge of the workpiece and hold it downwardly. This downward holding will, of course, be effected as the handle 35 is operated to move the ledge 17 into engagement with the upper surface of the workpiece.

Referring now to the construction illustrated in Figures 5 to 8, the workbench comprises a frame which is generally rectangular and comprises four legs 101, four bottom horizontally extending brace members 102 and four upper brace members 103. The frame is thus of a robust generally rectangular construction.

As can be seen from Figure 5 a fence 106 is bolted to the rear frame member by six bolts 105, the fence itself extending vertically upwardly and being provided with an upper flange 107. Secured, e.g. by welding or bolting, to this flange 107 are two flat plates 108, 109 which form a ledge which is generally horizontally extending. A large number of holes 110 are arranged linearly and preferably equidistantly along the ledge 108, 109 parallel to the fence 106.

Mounted over the upper brace members 103 is a table 111, this having an upper working surface 112 and a central linear channel 113 forming a groove extending from back to front of the bench. The table 111 is formed as a moulding from glass fibre reinforced plastics material and is provided with a peripheral skirt 114 which extends downwardly through the upper parts of the legs 101. In order to allow a bolt 105 to pass, the skirt at the rear of the table is formed with six vertically extending slots 115.

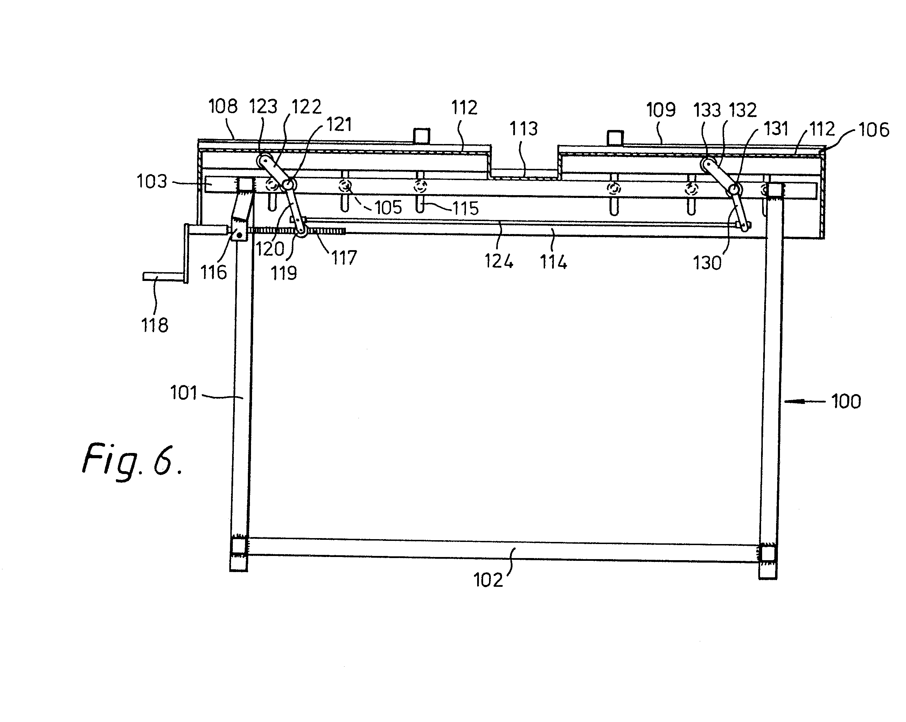

Secured to one of the cross braces 103 is a depending support 116 which is provided with a bearing (not shown) for a generally horizontally extending threaded shaft 117 which can be rotated by means of a handle 118. A nut 119 is threaded onto the shaft 117 and is carried by a first crank 120 which is mounted on a cross-shaft 121 which extends from front to back of the bench and is capable of pivoting about its axis. The cross-shaft carries two spaced apart arms 122 on which is rotatably mounted a roller 123 which runs on a lower surface of the table 111. Preferably the table is provided with four metal rails which extend from left to right, as seen in Figure 6, and first of all act to strengthen the work table and secondly so as to form a track along which the roller 123 may run.

Journalled to the crank 120 is a connecting rod 124 which is also journalled to a further crank 130 carried by a shaft 131 having an arm 132 with a roller 133. Thus, rotation of the handle 118, and thus of the shaft 117, will cause the nut 119 to move to the left or right, as seen in Figure 6, thus rocking the crank 120 and also the crank 130 in either a clockwise or anticlockwise direction. As shown, if it is rocked in a clockwise direction the rollers 123 will cause the table to be raised. It will be appreciated that if a workpiece is placed on the working surface 112 and pushed under the ledge, if the handle 118 is operated in this way, the working surface will rise and will clamp the workpiece under the ledge 108, 109. From Figure 5 it will be noted that the fence 106 has a recess 124 aligned with the channel 113.

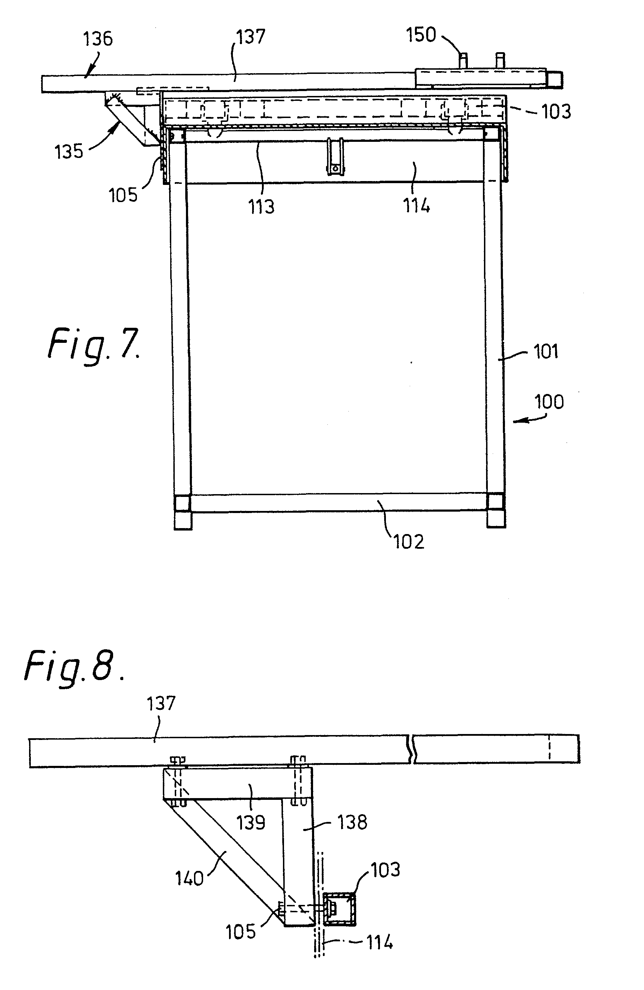

A cantilever mounting arrangement 135 (Figure 7) is used to support a bridge 136 consisting of two parallel square cross-section guide rails 137. The The cantilever support arrangement is shown more clearly in Figure 8, and it will be seen that two of the bolts 105 carry a triangular bracket consisting of an upright 138, a horizontal bar 139 and a hypotenuse bar 140. These can, in fact, be made rather larger than illustrated in the drawings if desired. Bolted to the member 139 are the two rails 137 which are joined at the back and front by braces 141. Figure 5 shows one of two small brackets 142 secured one to the outside of each of the guide rails 137. Engageable with these brackets are latch members 143 which can be secured to the brackets by means of bolts and wing nuts 144. This will normally keep the bridge absolutely rigid and horizontal. In certain circumstances it may be necessary to insert a very large workpiece in which case the wing nuts 144 can be released and the latches 143 pivoted out of the way. The cantilever arrangement 135 will normally be sufficiently strong to carry the bridge even with the latches 143 disconnected, particularly when a workpiece is mounted closely under the guide
rails 137.

Slidable longitudinally of the guide rails
137 is a carriage 145 which has small plates (not shown)
which extend under the guide rails so that the carriage
is captive thereon.

The guide rails are provided with several
equally spaced vertical holes (not shown) into which
can be inserted spring loaded pins 150 to hold the
carriage in any desired position.  It will be noted
that the carriage is similar to that described in the
first embodiment and that it has a generally square
hole 151 therein.  Into the square hole may be placed
the router or saw as mentioned above but preferably
a slightly different arrangement is provided in which
while a square plate is inserted; this square plate
itself has, in effect a rotary turntable upon which the
tool may be mounted so that the tool can take up any
desired angle.

The workbench can be used in a very similar
manner to that described in connection with the first
embodiment except that instead of the ledge being used
to clamp down on the workpiece, the working surface is
caused to rise by winding the handle thereby to clamp
the workpiece against the bottom of the ledge.

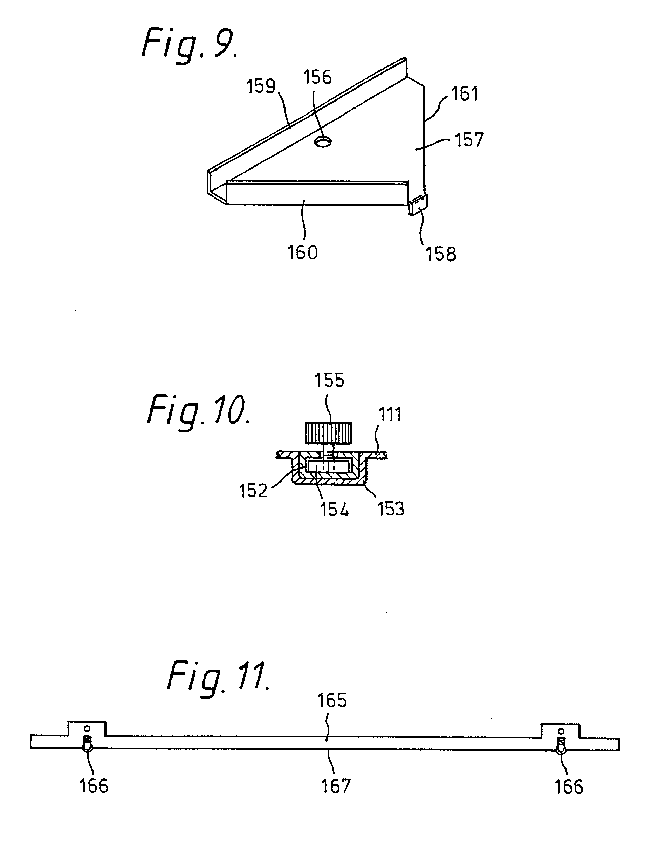

The table 111 is preferably provided with two
front to back extending tracks of dovetail or channel
section, these not being shown in Figure 5 for the sake
of clarity, but they run in the table substantially
parallel to the rails 137.  A particular form of this
track is illustrated in Figure 10 by the reference numeral
152.  It will be seen that the track 152 is inserted in a
recess portion 153 of the table 111 and it has inserted
therein a nut 154 into which is threaded a knurled bolt
155.  This can be used to secure a clamping device as illustrated in Figure 9, the bolt 155 passing through an aperture 156 in the generally triangular bottom plate 157 of this clamp. The forward edge of the clamp has a downturned tab 158 and the rear wall 159 and the left side angled wall 160 include upturned flanges while the third side 161 does not. In use of this clamping arrangement the tab 158 can be abutted against the front edge of the table 111 and the knurled bolt 155 tightened to secure it in place. If it is desired, for example, to make a mitre cut on the end of a workpiece at 45° then the workpiece is slid along the flange 160 relative to a saw. Alternatively the workpiece can be slid along the flange 159 generally parallel to the fence to make a longitudinal cut therein.

An alternative clamping arrangement is illustrated in Figure 11 and includes a strip 165 which is of substantially the same length as the table 111 and it is provided with two sprung loaded rollers 166. The bolts 155 are slid to the appropriate position on the tracks 152 and the strip 165 is clamped so that its edge 167 is substantially parallel to the fence. The actual position is adjusted to suit t..e particular workpiece with which one is starting and this workpiece is thus urged by the sprung loaded rollers 166 against the fence. This can be used to make a rip-saw cut or a routing action on the longitudinal edge of the workpiece.

- 13 -

C L A I M S

1. A bench comprising a substantially
horizontal working surface (13,14,112), a fence (16,106)
defining a straight edge adjacent the rear side of the
working surface, characterised in that the fence includes
a ledge (17,108,109), which extends over a portion of
the working surface and in that means (19-44, 118-133)
are provided to move the ledge vertically, relative
to the working surface, so that a workpiece on the working
surface may be releasably clamped between the ledge and
the working surface.

2. A bench according to claim 1, characterised
in that the working surface is in the form of a table-like
structure (13,14,112) and in that a central groove (15,113)
extends from the front to the rear of the working surface.

3. A bench according to claim 1 or 2,
characterised in that a bridge (29, 136) is secured to
the fence (16,106) and includes forwardly extending
guides (29,137), which extend accurately perpendicular
to the straight edge defined by the fence (16,106), and
in that a carriage (30, 145) is slidable along said guides
and is adapted to carry a power tool.

4. A bench according to claim 3, characterised
in that the bridge (29), the fence (16) and the ledge
(17) are mounted by four upstanding threaded pillars
(21,22) and in that a gear system (35-44) enables said
pillar to be rotated together by a single handle (33),
to cause the bridge (29) fence (16) and ledge (17) to
be raised or lowered to clamp a workpiece on the working
surface.

5. A bench according to claim 3, characterised
in that the bench comprises a frame (100-103), in that
the fence (106), the ledge (108) and the bridge (136) are

- 14 -

secured to the frame in a rigid manner and in that means (118-133) are provided to cause the working surface (112) to be raised and lowered relative to the frame and thus relative to fence, ledge and bridge.

6. A bench according to claim 5, characterised in that said means comprise arms (120, 122, 130, 132) pivotally mounted on a part (103) of said frame, rollers (123, 133) mounted on the upper ends of said arms, a connecting rod (124) interconnecting said arms and a handle (118) connected to a shaft (117) threadedly connected to one of said arms, whereby rotation of the handle causes simultaneous pivoting of said arms to raise or lower said rollers, the undersurface of the working surface resting on said rollers so as to be raised and lowered therewith.

7. A bench according to claim 6, characterised in that said working surface (112) is the upper surface of a table (111) formed of glass reinforced plastics material, in the said table has a peripheral depending strengthening skirt (114) and in that metal rails are provided on the undersurface of said table and positioned to form tracks on which said rollers run.

8. A bench according to claim 7, characterised in that said peripheral skirt is provided with vertical slots (115) through which pass bolts (105) which hold the fence (106) to the frame (160) and serve to guide the table for vertical movement.

9. A bench according to any one of claims 3 to 8, characterised in that the carriage (30,145) is provided with a symmetrical, e.g. square, recess (31,151) to accommodate a similarly shaped plate on the tool, enabling the tool to be mounted in two orientations accurately perpendicular to one another.

- 15 -

10. A bench according to any one of claims 3 to 9, characterised in that it further comprises a pusher member (165) including an elongate strip of material sufficiently thin to pass under the bridge, spaced spring loaded rollers (166) in the rear edge of the strip and means (153-155) to clamp the strip so that the rollers are equally spaced from the fence, so that they can urge a workpiece thereagainst while it is pushed parallel to the fence.

Fig.1.

Fig.4.

Fig.2.

Fig.3.

Fig.5.

Fig. 6.

0096470

5/6

Fig. 7.

Fig. 8.

Fig.9.

159    156                    161
                             157

160            158

Fig.10.

155
        111
152
154    153

Fig.11.

165

166        167        166